# FASCICULE DE BREVET EUROPEEN

(11) **EP 3 510 834 B1**
(45) Date de publication et mention de la délivrance du brevet: **30.12.2020**
(21) Numéro de dépôt: 17780791.4
(22) Date de dépôt: 05.09.2017
(51) Int. Cl.: H05B 3/04, B60H 1/22, F24H 3/04, F24H 9/18, H01R 13/52, H05B 3/06

(54) **DISPOSITIF DE CHAUFFAGE ÉLECTRIQUE**
ELEKTRISCHE HEIZVORRICHTUNG
ELECTRIC HEATING DEVICE

(30) Priorité: 09.09.2016 FR 1658437
(43) Date de publication de la demande: 17.07.2019
(73) Titulaire: Valeo Systemes Thermiques, 78322 Le Mesnil Saint-Denis Cedex (FR)
(72) Inventeur: KARAASLAN, Serif, 78322 Le Mesnil Saint-Denis Cedex (FR); COLINET, Sébastien, 78322 Le Mesnil Saint-Denis Cedex (FR)
(74) Mandataire: Tran, Chi-Hai
(86) Numéro de dépôt international: PCT/FR2017/052344
(87) Numéro de publication internationale: WO 2018/046835

(56) Documents cités:
- EP-A2- 0 135 299
- FR-A1- 2 838 599
- US-A1- 2011 189 877
- US-A1- 2013 161 306
- US-B1- 7 234 950

## Description

L'invention concerne un dispositif de chauffage électrique pour véhicule automobile ainsi que le procédé de fabrication dudit dispositif de chauffage. Plus particulièrement, l'invention concerne un dispositif de chauffage électrique intégré au sein d'une installation de ventilation, chauffage et/ou climatisation d'un véhicule automobile.

Un dispositif de chauffage comporte généralement au moins un module chauffant contenu dans un corps de chauffe. Ce corps de chauffe comprend quant à lui un boîtier de commande et d'alimentation électrique du ou des modules chauffants à l'intérieur duquel peut être disposé un circuit imprimé. Un connecteur d'alimentation et un connecteur de commande font alors saillie du circuit imprimé et traversent le boîtier respectivement au niveau d'un orifice d'alimentation et d'un orifice de commande. Sur ces connecteurs d'alimentation et de commande viennent se brancher des connecteurs afin d'assurer l'alimentation électrique et gérer le fonctionnement du dispositif de chauffage additionnel.

Un tel dispositif de chauffage électrique pour véhicule automobile est décrit dans le document FR 2 838 599 A.

Cependant, pour un tel connecteur de commande, des infiltrations d'eau peuvent se produire en condition humide. Plus précisément, de l'eau peut s'infiltrer dans l'orifice de commande, entre le connecteur et le boîtier.

Un des buts de la présente invention est donc de remédier au moins partiellement aux inconvénients de l'art antérieur et de proposer un dispositif de chauffage amélioré.

La présente invention concerne donc un dispositif de chauffage électrique pour le chauffage d'un flux d'air traversant notamment un conduit d'une installation de ventilation, chauffage et/ou climatisation d'un véhicule automobile, le dispositif de chauffage comportant au moins un module chauffant contenu dans un corps de chauffe, ledit corps de chauffe comprenant un boîtier de commande et d'alimentation électrique du au moins module chauffant, ledit boîtier comprenant en son sein un module de commande tel que par exemple un circuit imprimé duquel font saillies au moins un connecteur d'alimentation et au moins un connecteur de commande,
ledit boîtier comprenant également un orifice d'alimentation de sorte que le connecteur d'alimentation ressorte dudit boîtier et un orifice de commande de sorte que le connecteur de commande ressorte dudit boîtier,
le boîtier comportant une jupe faisant saillie parallèlement au connecteur de commande sur la périphérie de l'orifice de commande, ladite jupe venant de matière avec le boîtier.

Cette jupe permet d'assurer un bonne étanchéité au niveau de l'orifice de commande notamment lorsqu'un connecteur dédié est branché sur le connecteur de commande. En effet, ce connecteur dédié vient s'intercaler et combler l'espace entre la jupe et le connecteur de commande ce qui limite les infiltrations de poussières et d'eau dans l'orifice de commande. Avec une telle jupe il est possible d'envisager un indice de protection IP52 pour le dispositif de chauffage.

Selon un aspect de l'invention, l'espace entre la jupe et et le connecteur de commande est compris entre 0,5 et 1mm.

Selon un autre aspect de l'invention, la jupe a une hauteur comprise entre 120 et 80 % de la hauteur du connecteur de commande ressortant du boîtier.

Selon un autre aspect de l'invention, la jupe comporte un décrochement sur une portion de sa périphérie.

Selon un autre aspect de l'invention, le rebord de la jupe est complémentaire d'un épaulement d'un connecteur dédié destiné à venir se brancher sur le connecteur de commande.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective d'un dispositif de chauffage additionnel,
- la figure 2 montre une représentation schématique en perspective d'une moitié inférieure d'un boîtier de commande et d'alimentation et de son contenu,
- la figure 3 montre une représentation schématique en perspective d'une moitié supérieure d'un boîtier de commande et d'alimentation,
- la figure 4 montre une représentation en perspective d'un orifice de commande.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation.

Dans la présente description on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tels ou tels critères.

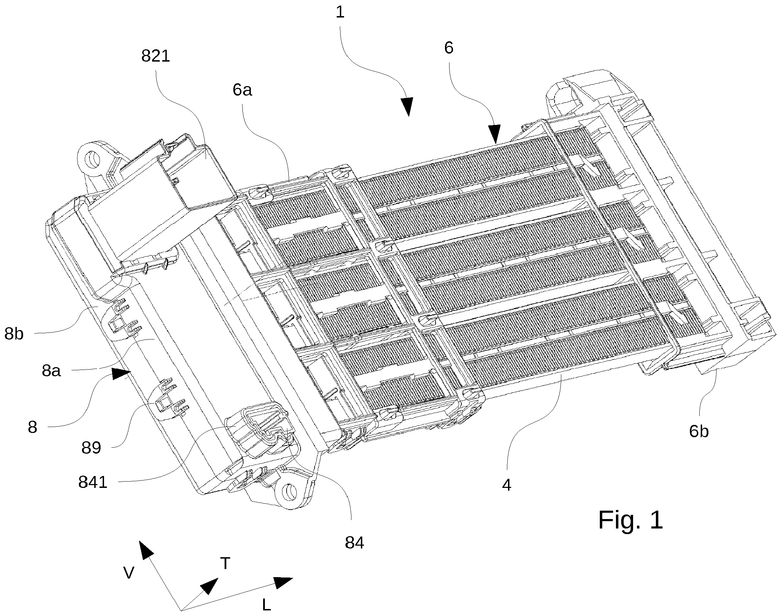

Dans la description qui va suivre, on se référera à une orientation fonction des axes Longitudinal, Vertical et Transversal tels qu'ils sont définis arbitrairement par le trièdre L,V,T représenté sur les figures 1 à 4. Le choix des appellations de ces axes n'est pas limitatif de l'orientation que peut prendre le dispositif dans son application à un véhicule automobile.

Comme le montre la figure 1, le dispositif de chauffage 1 comporte au moins un module chauffant 4 configuré pour transformer un courant électrique en énergie thermique, contenu dans un corps de chauffe 6.

Le dispositif de chauffage 1 est apte à être logé dans un conduit de circulation d'air d'une installation de ventilation, chauffage et/ou climatisation (HVAC pour l'acronyme anglais *Heating, Ventilation and Air-Conditioning),* de manière à transformer l'énergie électrique prélevée sur le véhicule en énergie thermique et à la restituer dans l'air traversant ledit HVAC.

L'HVAC n'est pas ici représenté, mais on comprendra qu'un conduit principal de cet HVAC comporte de façon classique une ouverture réalisée dans la paroi pour l'insertion du dispositif de chauffage additionnel.

Le module chauffant 4 est disposé longitudinalement selon l'axe longitudinal L, dans le corps de chauffe 6. Le corps de chauffe 6 comporte, à une extrémité du module chauffant 4, une première extrémité 6a comportant un boîtier 8 de commande et d'alimentation du module chauffant 4. A l'extrémité opposée du module chauffant 4, le corps de chauffe 6 comporte une deuxième extrémité 6b. Dans l'exemple illustré à la figure 1, la première 6a et la deuxième 6b extrémités sont indépendantes, cependant il est tout à fait possible d'imaginer un mode de réalisation où la première 6a et la deuxième 6b extrémités sont reliées entre elles par des traverses afin d'encadrer complètement le module de chauffe 4.

Le corps de chauffe 6 est de préférence réalisé en un matériau plastique, par exemple du polypropylène ou du polyamide, chargé en fibres de verre. Le boîtier 8 peut être réalisé dans un matériau plus résistant à la chaleur que le reste du corps de chauffe 6. En effet, les connexions électriques des modules chauffants 4 sont réalisées au niveau dudit boîtier 8 et il peut donc être soumis à des températures élevées.

Le module chauffant 4 peut notamment comporter :
- au moins deux ensembles conducteurs formés :
   ∘ d'une électrode conductrice prolongée longitudinalement par une extrémité libre d'électrode, ladite extrémité libre d'électrode étant apte à être reliée à la source d'alimentation électrique du véhicule au niveau du boîtier 8,
   ∘ d'une plaque de maintien pouvant être réalisée dans un matériau métallique comme l'aluminium par exemple, et
   ∘ d'un intercalaire pris en sandwich et maintenu entre l'électrode conductrice et la plaque de maintien, ledit intercalaire peut notamment être une bande métallique repliée en accordéon et placée entre l'électrode conductrice et la plaque de maintien de sorte qu'un flux d'air puisse traverser ledit intercalaire,
- au moins une céramique à effet de coefficient de température positif (CTP), la céramique étant prise en sandwich entre deux ensembles conducteurs.

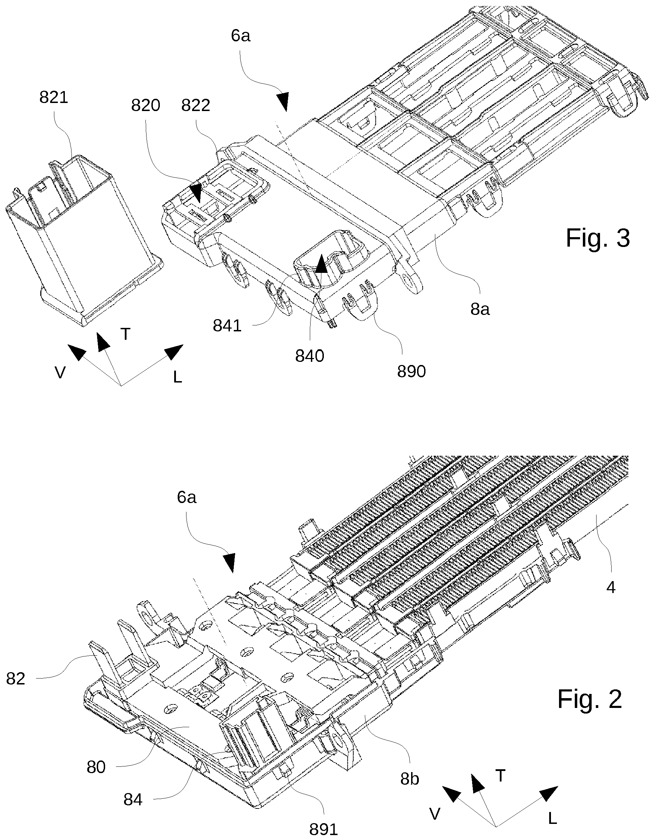

Comme le montre la figure 2, le boîtier 8 comporte en son sein un circuit imprimé 80 duquel font saillie, selon l'axe transversal T, un connecteur d'alimentation 82 et un connecteur de commande 84.

Ce circuit imprimé 80 permet l'alimentation électrique des modules chauffants 4 par connexion à une source d'électricité au niveau du connecteur d'alimentation 82 et le pilotage du fonctionnement des modules chauffants 4 en contrôlant leur alimentation ou non ainsi que leur intensité de chauffe au moyen d'une connexion à, par exemple, une unité de contrôle électronique du véhicule automobile qui transmet ses commandes via le connecteur de commande 84.

Comme illustré plus en détail à la figure 3, le boîtier 8 comporte un orifice d'alimentation 820 de sorte que le connecteur d'alimentation 82 ressorte dudit boîtier 8 et un orifice de commande 840 de sorte que le connecteur de commande 84 ressorte également dudit boîtier 8.

Le boîtier 8 peut notamment comporter à la périphérie de l'orifice d'alimentation 820 une rainure 822 dans laquelle vient se glisser un manchon 821, par exemple selon l'axe longitudinal L comme représenté sur la figure 3. Le manchon 821 s'étend selon l'axe transversal T et à l'intérieur dudit manchon 821 est disposé le connecteur d'alimentation 82. Ce manchon 821 permet notamment une bonne étanchéité au niveau de l'orifice d'alimentation 820.

Le boîtier 8 comporte une jupe 841 faisant saillie parallèlement au connecteur de commande 84, c'est à dire s'étendant selon l'axe transversal T, à la périphérie de l'orifice de commande 840. La jupe 841 vient de matière avec le boîtier 8. Cette jupe 841 permet d'assurer un bonne étanchéité au niveau de l'orifice de commande 840 notamment lorsqu'un connecteur dédié est branché sur le connecteur de commande. En effet, ce connecteur dédié vient s'intercaler et combler l'espace entre la jupe 841 et le connecteur de commande 84 ce qui limite les infiltrations de poussières et d'eau dans l'orifice de commande 840. Avec une telle jupe 841 il est possible d'envisager un indice de protection IP52 pour le dispositif de chauffage 1.

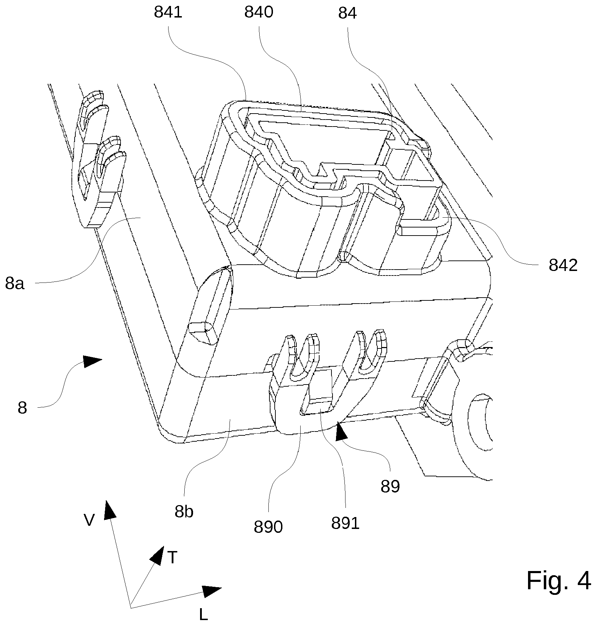

La jupe 841 et l'orifice de commande 840 sont visibles plus en détail à la figure 4. L'espace entre la jupe 841 et le connecteur de commande 84 est compris entre 0,5 et 1mm. De préférence, cet espace est de 0,7mm ce qui correspond à l'épaisseur de la paroi externe du connecteur dédié destiné à venir se brancher sur le connecteur de commande 84. Cela permet de limiter le jeu entre le connecteur dédié et la jupe 841 et ainsi de renforcer l'étanchéité entre ces éléments.

Toujours dans le but d'améliorer l'étanchéité, la jupe 841 a de préférence une hauteur comprise entre 120 et 80 % de la hauteur du connecteur de commande 84 ressortant du boîtier 8.

Le rebord de la jupe 841 peut notamment être complémentaire d'un épaulement du connecteur dédié destiné à venir se brancher sur le connecteur de commande 84. Cet épaulement recouvre voir même peut entrer en contact avec le rebords de la jupe 841 et permet d'assurer une bonne étanchéité.

La jupe 841 peut également comporter un décrochement 842 sur une portion de sa périphérie. Ce décrochement 842 permet de se saisir du connecteur dédié destiné à être branché sur le connecteur de commande 84 afin de pouvoir le débrancher si besoin.

Le boîtier 8 et la première extrémité 6a du corps de chauffe 6 peuvent notamment être composés d'un demi-boîtier supérieur 8a et d'un demi-boîtier inférieur 8b dont la séparation est réalisée selon un plan comprenant l'axe longitudinal L et l'axe vertical V. On parle ici de demi-boîtier supérieur 8a pour le demi-boîtier comprenant l'orifice d'alimentation 820 et l'orifice de commande 840 et de demi-boîtier inférieur 8b pour le demi-boîtier ne comportant pas l'orifice d'alimentation 820 et l'orifice de commande 840. Les demi-boîtiers supérieur 8a et inférieur 8b sont reliés entre eux par des moyens de maintien comme par exemple des vis ou encore des fixations à déformation élastique 89, comme illustré sur les figures 1 et 4. Ces fixations à déformation élastique 89 comporte ici un crochet élastique 890 solidaire du demi-boîtier supérieur 8a (visible sur la figure 2) venant en coopération avec un ergot 891 solidaire du demi-boîtier inférieur 8b (visible sur la figure 3).

Ainsi, on voit bien que du fait de sa structure et notamment de la présence de la jupe 841, le dispositif de chauffage 1 présente une bonne étanchéité au niveau de son orifice de commande.

## Revendications

1. Dispositif de chauffage (1) électrique pour le chauffage d'un flux d'air traversant notamment un conduit d'une installation de ventilation, chauffage et/ou climatisation d'un véhicule automobile, le dispositif de chauffage (1) comportant au moins un module chauffant (4) contenu dans un corps de chauffe (6), ledit corps de chauffe (6) comprenant un boîtier (8) de commande et d'alimentation électrique du au moins module chauffant (4), ledit boîtier (8) comprenant en son sein un module de commande (80) duquel font saillies au moins un connecteur d'alimentation (82) et au moins un connecteur de commande (84),
ledit boîtier (8) comprenant également un orifice d'alimentation (820) de sorte que le connecteur d'alimentation (82) ressorte dudit boîtier (8) et un orifice de commande (840) de sorte que le connecteur de commande (84) ressorte dudit boîtier (8),
**caractérisé en ce que** le boîtier (8) comporte une jupe (841) faisant saillie parallèlement au connecteur de commande (84) sur la périphérie de l'orifice de commande (840), ladite jupe (841) venant de matière avec le boîtier (8).

2. Dispositif de chauffage (1) selon la revendication précédente **caractérisé en ce que** l'espace entre la jupe (841) et et le connecteur de commande (84) est compris entre 0,5 et 1mm.

3. Dispositif de chauffage (1) selon l'une des revendications précédentes, **caractérisé en ce que** la jupe (841) a une hauteur comprise entre 120 et 80 % de la hauteur du connecteur de commande (84) ressortant du boîtier (8).

4. Dispositif de chauffage (1) selon l'une des revendications précédentes, **caractérisé en ce que** la jupe (841) comporte un décrochement (842) sur une portion de sa périphérie.

5. Dispositif de chauffage (1) selon l'une des revendications précédentes, **caractérisé en ce que** le rebord de la jupe (841) est complémentaire d'un épaulement d'un connecteur dédié destiné à venir se brancher sur le connecteur de commande (84).

## Patentansprüche

1. Elektrische Heizvorrichtung (1) zur Erwärmung eines Luftstroms, der insbesondere eine Leitung einer Lüftungs-, Heizungs- und/oder Klimatisierungsanlage eines Kraftfahrzeugs durchströmt, wobei die Heizvorrichtung (1) mindestens ein Heizmodul (4) aufweist, das in einem Heizkörper (6) enthalten ist, wobei der Heizkörper (6) ein Gehäuse (8) zur Steuerung und Stromversorgung des mindestens Heizmoduls (4) umfasst, wobei das Gehäuse (8) in seinem Inneren ein Steuerungsmodul (80) umfasst, von dem mindestens ein Stromversorgungsstecker (82) und mindestens ein Steuerungsstecker (84) abstehen,
wobei das Gehäuse (8) ebenfalls eine Stromversorgungsöffnung (820) umfasst, so dass der Stromversorgungsstecker (82) wieder aus dem Gehäuse (8) austritt, und eine Steuerungsöffnung (840), so dass der Steuerungsstecker (84) wieder aus dem Gehäuse (8) austritt,
**dadurch gekennzeichnet, dass** das Gehäuse (8) eine Schürze (841) aufweist, die parallel zum Steuerungsstecker (84) am Rand der Steuerungsöffnung (840) absteht, wobei die Schürze (841) einstückig mit dem Gehäuse (8) ausgebildet ist.

2. Heizvorrichtung (1) nach dem vorhergehenden Anspruch, **dadurch gekennzeichnet, dass** der Raum zwischen der Schürze (841) und dem Steuerungsstecker (84) zwischen 0,5 und 1 mm beträgt.

3. Heizvorrichtung (1) nach einem der vorhergehenden Ansprüche, **dadurch gekennzeichnet, dass** die Schürze (841) eine Höhe zwischen 120 und 80 % der Höhe des Steuerungssteckers (84) aufweist, der wieder aus dem Gehäuse (8) austritt.

4. Heizvorrichtung (1) nach einem der vorhergehenden Ansprüche, **dadurch gekennzeichnet, dass** die Schürze (841) auf einem Abschnitt ihrer Peripherie einen Absatz (842) aufweist.

5. Heizvorrichtung (1) nach einem der vorhergehenden Ansprüche, **dadurch gekennzeichnet, dass** der Rand der Schürze (841) zu einer Schulter eines Spezialsteckers komplementär ist, der dazu bestimmt ist, an den Steuerungsstecker (84) angeschlossen zu werden.

## Claims

1. Electric heating device (1) for heating an air flow notably passing through a conduit of a ventilation, heating and/or air conditioning installation of a motor vehicle, the heating device (1) comprising at least one heating module (4) contained in a heating body (6), said heating body (6) comprising a control and power supply housing (8) of the at least one heating module (4), said housing (8) containing a control module (80) from which at least one power supply connector (82) and at least one control connector (84) project,
said housing (8) also comprising a power supply opening (820) such that the power supply connector (82) emerges from said housing (8) and a control opening (840) such that the control connector (84) emerges from said housing (8),
**characterized in that** the housing (8) comprises a skirt (841) projecting parallel to the control connector (84) on the periphery of the control opening (840), said skirt (841) being made in one piece with the housing (8).

2. Heating device (1) according to the preceding claim, **characterized in that** the space between the skirt (841) and the control connector (84) is between 0.5 and 1 mm.

3. Heating device (1) according to either of the preceding claims, **characterized in that** the skirt (841) has a height of between 120% and 80% of the height of the control connector (84) emerging from the housing (8).

4. Heating device (1) according to any of the preceding claims, **characterized in that** the skirt (841) comprises an indentation (842) on a portion of its periphery.

5. Heating device (1) according to any of the preceding claims, **characterized in that** the edge of the skirt (841) is complementary to a shoulder of a dedicated connector designed to be connected to the control connector (84).
